# EUROPÄISCHE PATENTSCHRIFT

(11) **EP 1 117 939 B1**
(45) Veröffentlichungstag und Bekanntmachung des Hinweises auf die Patenterteilung: **17.03.2004**
(21) Anmeldenummer: 99969772.5
(22) Anmeldetag: 16.09.1999
(51) Int. Cl.: F16B 4/00, F16B 1/00

(54) **ANORDNUNG MIT EINEM FLANSCH UND VERFAHREN ZUR HERSTELLUNG EINER DRUCKVERBINDUNG BEI EINEM FLANSCH**
DEVICE WITH A FLANGE AND METHOD FOR PRODUCING A PRESSURE CONNECTION IN A FLANGE
DISPOSITIF A BRIDE ET PROCEDE POUR LA FABRICATION D'UNE JONCTION PAR PRESSION UTILISANT UNE BRIDE

(30) Priorität: 28.09.1998 DE 19844411
(43) Veröffentlichungstag der Anmeldung: 25.07.2001
(73) Patentinhaber: Hochspannungsgeräte Porz GmbH, 51145 Köln (DE)
(72) Erfinder: FRIELINGSDORF, Helmut, D-51469 Bergisch Gladbach (DE)
(74) Vertreter: Berg, Peter
(86) Internationale Anmeldenummer: PCT/EP1999/006871
(87) Internationale Veröffentlichungsnummer: WO 2000/019112

(56) Entgegenhaltungen:
- DE-A- 4 202 111
- DE-C- 653 688
- GB-A- 1 561 098

## Beschreibung

Die Erfindung betrifft eine Anordnung mit einem Flansch, welcher ein zylindrisches Bauteil zu dessen Befestigung umschließt, wobei zwischen Flansch und Bauteil ein koaxialer Hohlraum verläuft, in welchem in koaxialen Lagen ein Füllstoff und ein Gießerkstoff angeordnet sind. Die Erfindung betrifft ferner ein Verfahren zur Herstellung einer Druckverbindung bei einem Flansch.

Aus der DE-PS 653 688 ist eine solche Anordnung mit einem Flansch bekannt. Der Flansch umschließt ein zylindrisches Bauteil, ein Tonrohr, zu dessen Befestigung, wobei zwischen dem Flansch und dem Tonrohr ein als "Spielraum" bezeichneter Hohlraum vorgesehen ist. Die Oberfläche des Tonrohrs ist im Hohlraum so gewellt, daß mehrere umlaufende ringförmige Nuten gebildet sind. Im Hohlraum ist das Tonrohr von einer koaxialen Lage Füllstoff in Form einer am Tonrohr anliegenden rohrförmigen Hülse so umgeben, daß die Nuten abgedeckt sind und dadurch ringförmige, durch die Hülse und das Tonrohr begrenzte Hohlräume gebildet sind. Zur Verbindung des Tonrohrs mit dem Flansch wird der Hohlraum zwischen der Hülse und dem Flansch mit einer durch Erhitzen verflüssigten Gießwerkstoff gefüllt. Beim Erstarren zieht sich der Geißwerkstoff zusammen. Dadurch wird auf die Hülse ein radialer Druck ausgeübt, dem die Hülse nachgibt. Dabei verformt sich die Hülse und dringt teilweise in die ringförmigen Hohlräume ein. Durch das Nachgeben der Hülse ist zum einen verhindert, daß auf das Tonrohr unzulässige hohe mechanische Spannungen ausgeübt werden, die zu einer Zerstörung des Tonrohrs führen könnten und gleichzeitig ist eine formschlüssige Verbindung zwischen dem Gießwerkstoff und dem Tonrohr hergestellt, durch die das Tonrohr am Flansch gehalten ist.

Eine Flanschverbindung zwischen Materialien mit verschiedenen Ausdehnungskoeffizienten muß den temperaturbedingten Veränderungen der Abmessungen folgen, um ihre Formschlüssigkeit und damit auch gegebenenfalls eine Dichtwirkung zu behalten. Ein Beispiel für eine derartige Druck- oder Flanschverbindung ist bei einer Hochspannungsdurchführung gegeben. Bei einer Hochspannungsdurchführung kann z. B. ein Aluminiumflansch zum Einsatz kommen, der einen gießharz-imprägnierten Isolierkörper zu dessen Befestigung kraftschlüssig umschließt. Durchführungen werden allgemein unter erhöhten Umgebungstemperaturen eingesetzt und müssen beim Einsatz in Geräten oder Anlagen mit starken Eigenschwingungen dauerhaft einen festen und sicheren Flanschsitz beibehalten. Dies betrifft insbesondere Durchführungen für Generatoren, die aufgrund ihrer rotierenden Massen mechanische Vibrationen aufweisen.

Der Erfindung liegt die Aufgabe zugrunde, eine Anordnung mit einem Flansch und ein Verfahren zur Herstellung einer Druckverbindnung für einen derartigen Flansch anzugeben, wobei eine sichere und feste Verbindung und dauerhafte Dichtwirkung - auch bei mechanischen Beanspruchungen des Flansches - erhalten bleiben soll.

Die Lösung der auf die Anordnung gerichteten Aufgabe mit einer Anordnung gelingt erfindungsgemäß dadurch, daß der Füllstoff volumenelastisch ist und daß die Menge des Gießwerkstoffs derart bemessen ist, daß bei ausgehärtetem Gießwerkstoff der Füllstoff auf einen vorgegebenen Wert komprimiert ist. Dabei wird von der Idee ausgegangen, daß als Verbindungsmittel keine festen Materialien, sondern eine Kombination aus einem komprimierbaren Füllstoff und einem Gießwerkstoff eingesetzt wird, wobei der Gießwerkstoff nach der mechanischen Montage des Flansches auf seinem zugeordneten Bauteil eingebracht werden kann. Die für die Druckverbindung erforderliche Kraft ist dabei auf einfache Weise durch die Menge des Gießwerkstoffs bestimmt. Dadurch wird die Anordnung bei der Herstellung auf den erforderlichen radialen Druck gebracht. Unter Druckverbindung wird hier die kraftschlüssige Verbindung zwischen Flansch und Bauteil verstanden, die durch diese radialen Kräfte entsteht. Die Verbindung braucht dabei nicht starr sein. Sie kann vielmehr durch die Wahl von Materialien und Druck "elastisch" sein, so daß kleine Bewegungen zwischen Flansch und Bauteil möglich sind.

Mit Vorteil weist der Hohlraum die Form eines Hohlzylinders auf. Damit kann je nach Anforderung auf eine vorgegebene Länge des Flansches die gewünschte spezifische Druckkraft oder - wirkung erzielt werden. Der Hohlraum ist dabei mit Vorteil als Ausnehmung im Flansch angeordnet. Damit ist eine einfache Herstellbarkeit gegeben, wobei an dem teuren und aufwendigen Bauteil selbst keine Veränderungen vorgenommen werden müssen.

Es ist günstig, wenn der Flansch eine mit dem Hohlraum verbundene Einfüllöffnung für den Gießwerkstoff aufweist. Damit ist eine Anordnung nach Art eines "Reifenventils" gebildet. Der Hohlraum ist damit auf einfache Weise mit dem Gießwerkstoff befüllbar.

Bevorzugt ist die Lage mit dem Gießwerkstoff zwischen dem Bauteil und der Lage des Füllstoffs angeordnet. Damit ist zwischen dem Bauteil, das ggf. aus einem Kunststoff oder einem Harz gefertigt ist, eine fest Verbindung hergestellt, die dauerhaft mechanisch fest und bei Bedarf auch dicht ist. Dabei kann die Lage des Gießwerkstoffs eine Schulter bilden, die als Anschlag für den Flansch dient. Auf diese Weise ist eine axiale Verschiebung des Flansches gegenüber dem Bauteil vermieden. Der ausgehärtete Gießwerkstoff dient somit als Plombe oder Sicherung. Gegebenenfalls kann auch ein Verdrehschutz vorgesehen sein, so daß eine Zerstörung der Druckverbindung vermieden ist.

Damit ist der erforderliche Druck für die gebildete Druckverbindung und Dichtwirkung vorgebbar.

Bevorzugt ist das Bauteil ein Isolator einer Durchführung, insbesondere für Hoch- oder Mittelspannung. Insbesondere ist dabei ein Einsatz als Generatordurchführung von Vorteil.

Als Gießwerkstoff kommt bevorzugt ein Gießharz zur Anwendung. Damit ist ein Werkstoff verwendet, der standardmäßig verfügbar und ggf. ohnehin bei der Herstellung des Bauteils verwendet wird. Somit ist auch eine gute Verbindung zwischen dem Gießwerkstoff und dem Bauteil ermöglicht.

Für den Füllstoff, der als Polsterschicht dient, kommt ein volumenelastischer Werkstoff in Frage, der aufgrund seiner Federeigenschaften einen dauerhaften mechanischen Druck beibehält. Der Druck muß dabei auch bei wechselnden Temperaturverhältnissen aufrechterhalten bleiben. Als Werkstoff kommt z. B. ein Elastomer, Kork oder z. B. Perbunan zur Anwendung.

Bei Bedarf können im Flansch auch zusätzliche Nuten mit weiteren Dichtmitteln vorgesehen sein, die eine zusätzliche Sicherung und Abdichtung der Flanschverbindung ermöglichen.

Die Lösung der auf das Verfahren gerichteten Aufgabe gelingt mit einem Verfahren nach dem Oberbegriff des Patentanspruches 11. Erfindungsgemäß dadurch, daß zwischen Flansch und Bauteil eine koaxiale Lage eines Füllstoffs eingelegt wird, und daß eine derart vorgegebene Menge Gießwerkstoff als Lage zwischen Bauteil und Füllstoff eingefüllt wird, daß der Füllwerkstoff um einen vorgegebenen Wert komprimiert ist. Auf diese Weise ist eine einfache Druckverbindung für einen Flansch gegeben, die auch hohen mechanischen Einsatzbedingungen - auch bei erhöhten Umgebungstemperaturen - standhält.

Weitere Vorteile und gegebenenfalls vorteilhafte Weiterbildungen des Verfahrens ergeben sich sinngemäß aus den obigen Ausführungen.

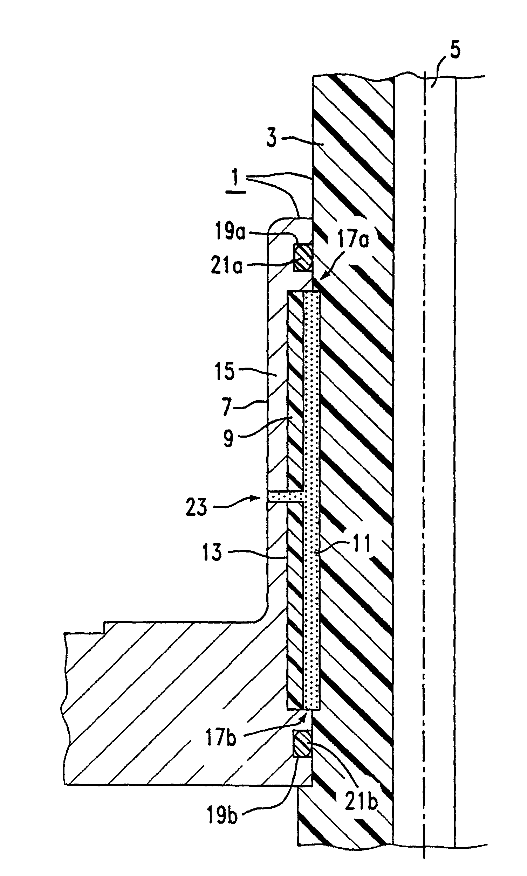

Ein Ausführungsbeispiel der Erfindung, weitere Vorteile und Details werden nachfolgend anhand der Zeichnung näher erläutert.

Die einzige Figur zeigt einen Teilausschnitt einer Flanschverbindung im Längsschnitt. Dabei ist eine rotationssymetrische Durchführung 1 gezeigt, die einen Isolator 3 umfaßt, durch den entlang seiner Längsachse ein Leiter 5, insbesondere ein Stromleiterrohr, geführt ist. Zur Befestigung der Durchführung 1 an seinem Einsatzort, z. B. an einem Hochspannungstransformator oder einem Generator, ist ein Flansch 7 vorgesehen, der den Isolator 3 umschließt.

Der Isolator 3 kann in üblicher Weise nach dem Stand der Technik aufgebaut sein. Beispielhaft kann er als Gießharzwikkel, also aus gießharzimprägnierten Papierlagen, ausgeführt sein. Ggf. können auch zusätzliche leitende Lagen zur Potentialsteuerung eingelegt sein. Der Flansch 7 ist aus Festigkeitsgründen bevorzugt aus Metall gefertigt. Hierbei kommt insbesondere Aluminium zum Einsatz.

Zur Erzeugung einer besonders guten kraftschüssigen Verbindung zwischen Flansch 7 und Isolator 3 ist vorliegend eine sogenannte Druckverbindung vorgesehen, die im wesentlichen eine Lage 9 eines komprimierbaren Füllstoffs und eine Lage 11 eines Gießwerkstoffs umfaßt. Die beiden Lagen 9 und 11 sind dabei in einem den Isolator 3 umlaufenden Hohlraum 13 angeordnet, welcher bevorzugt innenseitig in die Wandung des Flanschstutzens 15, z.B. als Ausnehmung eingearbeitet ist.

Die Lage 11 des Gießwerkstoffs ist dabei mit Vorteil direkt auf den Isolator 3 aufgebracht, so daß hier eine besonders gute Verbindung hergestellt ist. Damit ist an den beiden endseitigen Bereichen des Hohlraums 13 von der Lage des Gießwerkstoffs 11 jeweils eine Schulter 17a bzw. 17b gebildet, die als Anschlag gegenüber dem Flansch 7 dient. Damit ist eine axiale Verschiebung oder Längsverschiebung des Flansches 7 gegenüber dem Isolator 3 verhindert.

Die Lage 11 des Gießwerkstoffs kann dabei auf die Oberfläche des Isolators 3 oder ggf. auch in eine Nut des Isolators 3 eingelegt sein, so daß eine zusätzliche Erhöhung der Festigkeit und Dichtwirkung gegeben ist.

Eine zusätzliche Erhöhung der Dichtwirkung kann erzeugt sein, indem optional endseitig von dem Hohlraum 13 Nuten 19a und 19b vorgesehen sind, in denen zusätzliche Dichtmittel 21a und 21b eingelegt sind. Als Dichtmittel hierfür kommt jeweils z.B. ein O-Ring aus einem geeigneten Werkstoff, z. B. Elastomer oder Gummi, oder auch Kombinationen hiervon in Frage.

Zur Herstellung der Druckverbindung wird derart verfahren, daß zunächst die Lage 9 des Füllwerkstoffs in den Hohlraum 13 eingelegt wird und der Flansch 7 auf den Isolator 3 gestülpt wird. Durch eine Einfüllöffnung 23 wird der dann noch flüssige Gießwerkstoff mit einem vorgegebenen Druck in den Hohlraum 13 eingepreßt. Der Preßdruck muß dabei während der Aushärtung des Gießwerkstoffs erhalten bleiben. Das Gießharz dient dabei in seiner flüssigen Phase als hydraulische Flüssigkeit.

In einer praktischen Ausführung der Druck- oder Flanschverbindung wurde bei einem Fülldruck von ca. 6 bar auf die so erzeugte Fassungsstelle ein radialer Gesamtdruck von 4,2 t erzeugt. Aufgrund dieser Angabe ist ersichtlich, für welch hohe Beanspruchung eine derartige Druck- oder Flanschverbindung geeignet ist und welche Kräfte hier beherrscht und angewendet werden können.

Als aushärtbarer Gießwerkstoff kann z. B. ein Werkstoff zur Anwendung kommen, der unter dem Begriff Epoxidharz bekannt ist. Als Füllwerkstoff kommt ein volumenelastischer Werkstoff, insbesondere ein Elastomer oder ein Elastomer in Verbindung mit Kork in Frage.

Selbstverständlich sind im Rahmen der vorliegenden Idee auch weitere zusätzliche Ausgestaltungen möglich, die bei Flanschverbindungen allgemein bekannt und üblich sind, z. B. zusätzliche Dichtanordnungen, mechanische Verriegelungen, Verdrehsicherungen oder zusätzliche Befestigungen. Wesentlich für die vorliegende Idee ist, daß ein volumenelastischer Füllstoff hydraulisch derart zusammengepreßt wird, daß aufgrund seiner Federeigenschaften ein dauerhafter mechanischer Druck für die kraftschlüssige Verbindung erzeugt ist. Dabei kommt als hydraulische Flüssigkeit ein aushärtbares Gießharz zur Anwendung, das im flüssigen Zustand unter hohem Druck eingepreßt wird und den volumenelastischen Füllstoff zusammenpreßt. Die Druckverbindung ist dabei nach der Aushärtung des Gießwerkstoffs hergestellt.

Eine derartig hergestelle Durchführung kommt insbesondere bei Generatoren zur Anwendung, bei denen aufgrund ihrer Rotationsbewegung starke mechanische Schwingungen erzeugt werden, die die dort angebauten Einrichtungen stark belasten. Durch die neue Verbindungstechnik ist eine elastische Verbindung erzeugt, wodurch bei Dämpfung der Schwingungen an der Durchführung eine Erhöhung der Lebensdauer erzielt ist.

## Patentansprüche

1. Anordnung mit einem Flansch (7), welcher ein zylindrisches Bauteil (3) zu dessen Befestigung umschließt, wobei zwischen Flansch (7) und Bauteil (3) ein koaxialer Hohlraum (13) verläuft, in welchem in koaxialen Lagen (9,11) ein Füllstoff und ein Gießwerkstoff angeordnet sind,
**dadurch gekennzeichnet,**
**daß** der Füllstoff volumenelastisch ist und daß die Menge des Gießwerkstoffs derart bemessen ist, daß bei ausgehärtetem Gießwerkstoff der Füllstoff auf einen vorgegebenen Wert komprimiert ist.

2. Anordnung nach Anspruch 1,
**dadurch gekennzeichnet,**
**daß** der Hohlraum (13) die Form eines Hohlzylinders hat.

3. Anordnung nach Anspruch 2,
**dadurch gekennzeichnet,**
**daß** der Hohlraum (13) im Flansch (7) angeordnet ist.

4. Anordnung nach Anspruch 1, 2 oder 3,
**dadurch gekennzeichnet,**
**daß** der Flansch (7) eine mit dem Hohlraum (13) verbundene Einfüllöffnung (23) für den Gießwerkstoff aufweist.

5. Anordnung nach einem der Ansprüche 1 bis 4,
**dadurch gekennzeichnet,**
**daß** die Lage (11) mit dem Gießwerkstoff zwischen dem Bauteil (3) und der Lage (9) des Füllstoffs angeordnet ist.

6. Anordnung nach einem der Ansprüche 1 bis 5,
**dadurch gekennzeichnet,**
**daß** das Bauteil ein Isolator (3) einer Durchführung ist.

7. Anordnung nach einem der Ansprüche 1 bis 6,
**dadurch gekennzeichnet,**
**daß** als Gießwerkstoff ein Gießharz, dient.

8. Anordnung nach einem der Ansprüche 1 bis 7,
**dadurch gekennzeichnet,**
**daß** als Füllstoff Kork, ein Elastomer oder Perbunan dient.

9. Anordnung nach einem der Ansprüche 1 bis 8 in Verbindung mit Anspruch 5,
**dadurch gekennzeichnet,**
**daß** die Lage (11) Gießwerkstoff eine Schulter (17a,17b) aufweist, die als Anschlag für den Flansch (7) dient.

10. Anordnung nach einem der Ansprüche 1 bis 9,
**dadurch gekennzeichnet,**
**daß** im Flansch (7) zu beiden Enden des Hohlraums (13) jeweils eine umlaufende Nut (19a,19b) vorgesehen ist, in die ein um das Bauteil (3) umlaufendes Dichtmittel (21a,21b) eingelegt ist.

11. Verfahren zur Herstellung einer Druckverbindung zwischen einem Flansch (7) und einem von diesem umschlossenen zylindrischen Bauteil (3),
**dadurch gekennzeichnet, daß**
- zwischen Flansch (7) und Bauteil (3) eine koaxiale Lage (9) eines volumenelastischen Füllstoffs eingelegt wird, und daß
- eine derart vorgegebene Menge Gießwerkstoff als Lage (11) zwischen Bauteil (3) und Füllstoff eingefüllt wird, daß der Füllwerkstoff um einen vorgegebenen Wert komprimiert ist.

## Claims

1. Device with a flange (7), which encloses a cylindrical component (3) for fastening it, a coaxial hollow space (13) in which a filler and a casting material are arranged in coaxial layers (9, 11) running between the flange (7) and the component (3), **characterized in that** the filler is elastic in its volume and **in that** the amount of casting material is set in such a way that, when the casting material has cured, the filler is compressed to a predetermined value.

2. Device according to Claim 1, **characterized in that** the hollow space (13) has the form of a hollow cylinder.

3. Device according to Claim 2, **characterized in that** the hollow space (13) is arranged in the flange (7).

4. Device according to Claim 1, 2 or 3, **characterized in that** the flange (7) has a filling opening (23) for the casting material, which is connected to the hollow space (13).

5. Device according to one of Claims 1 to 4, **characterized in that** the layer (11) with the casting material is arranged between the component (3) and the layer (9) of the filler.

6. Device according to one of Claims 1 to 5, **characterized in that** the component is an insulator (3) of a bushing.

7. Device according to one of Claims 1 to 6, **characterized in that** a casting resin serves as the casting material.

8. Device according to one of Claims 1 to 7, **characterized in that** cork, an elastomer or perbunane serves as the filler.

9. Device according to one of Claims 1 to 8 in conjunction with Claim 5, **characterized in that** the layer (11) of casting material has a shoulder (17a, 17b), which serves as a stop for the flange (7).

10. Device according to one of Claims 1 to 9, **characterized in that** in the flange (7) there is provided at each of the two ends of the hollow space (13) a peripheral groove (19a, 19b), into which a sealant (21, 21b) running around the component (3) is placed.

11. Method for producing a pressure connection between a flange (7) and a cylindrical component (3) enclosed by the latter, **characterized in that**
- a coaxial layer (9) of a filler which is elastic in its volume is placed between the flange (7) and the component (3), and **in that**
- an amount of casting material predetermined in such a way that the filling material is compressed by a predetermined value is filled as a layer (11) between the component (3) and the filler.

## Revendications

1. Dispositif comprenant une bride (7), qui entoure un élément (3) cylindrique pour la fixation de celui-ci, une cavité (13) coaxiale, dans laquelle sont disposés en couches (9, 11) coaxiales une charge et un matériau de coulée, étant disposée entre la bride (7) et l'élément (3),
**caractérisé**
**en ce que** la charge a de l'élasticité en volume et en ce que la quantité du matériau de coulée est telle que, lorsque le matériau de coulée est durci, la charge est comprimée à une valeur donnée à l'avance.

2. Dispositif suivant la revendication 1,
**caractérisé**
**en ce que** la cavité (13) a la forme d'un cylindre creux.

3. Dispositif suivant la revendication 2,
**caractérisé**
**en ce que** la cavité (13) est prévue dans la bride (7).

4. Dispositif suivant la revendication 1, 2 ou 3
**caractérisé**
**en ce que** la bride (7) a une ouverture (23) de remplissage pour le matériau de coulée, cette ouverture communiquant avec la cavité (13).

5. Dispositif suivant l'une des revendications 1 à 4,
**caractérisé**
**en ce que** la couche (11) ayant le matériau de coulée est disposée entre l'élément (3) et la couche (9) de la charge.

6. Dispositif suivant l'une des revendications 1 à 5,
**caractérisé**
**en ce que** l'élément est un isolateur (3) d'une traversée.

7. Dispositif suivant l'une des revendications 1 à 6,
**caractérisé**
**en ce qu'**une résine de coulée sert de matériau de coulée.

8. Dispositif suivant l'une des revendications 1 à 7,
**caractérisé**
**en ce que** du liège, un élastomère ou du perbunan sert de charge.

9. Dispositif suivant l'une des revendications 1 à 8 en liaison avec la revendication 5,
**caractérisé**
**en ce que** la couche (11) du matériau de coulée a un épaulement (17a, 17b) qui sert de butée à la bride (7).

10. Dispositif suivant l'une des revendications 1 à 9,
**caractérisé**
**en ce qu'**il est prévu dans la bride (7) des deux côtés de la cavité (13) respectivement une gorge (19a, 19b) qui fait le tour et dans laquelle est mis un moyen (21 a, 21 b) d'étanchéité faisant le tour de l'élément (3).

11. Procédé de fabrication d'un assemblage résistant à la pression entre une bride (7) et un élément (3) cylindrique entouré de celle-ci,
**caractérisé en ce que**
- on met entre la bride (7) et l'élément (3) une couche (9) coaxiale d'une charge ayant de l'élasticité en volume et **en ce que**
- on introduit entre la charge et l'élément (3) une quantité donnée à l'avance de matériau de coulée en tant que couche (11 ) telle que le matériau de coulée est comprimé d'une valeur donnée à l'avance.
